# EUROPEAN PATENT SPECIFICATION

(11) **EP 0 836 955 B1**
(45) Date of publication and mention of the grant of the patent: **17.09.2003**
(21) Application number: 97117451.1
(22) Date of filing: 09.10.1997
(51) Int. Cl.: B60C 3/04, B60C 11/00, B60C 11/13

(54) **Improved-performance tyre and related manufacturing method and mould**
Reifen mit verbesserter Leistung, Verfahren zur Herstellung und Form
Bandage pneumatique perfectionné, procédé de fabrication associé et moule

(30) Priority: 18.10.1996 IT MI962157
(43) Date of publication of application: 22.04.1998
(73) Proprietor: PIRELLI PNEUMATICI Società per Azioni, 20126 Milano (IT)
(72) Inventor: Guermandi, Romano, Milano (IT)
(74) Representative: Giannesi, Pier Giovanni

(56) References cited:
- EP-A- 0 615 866
- EP-A- 0 667 251
- DE-A- 3 615 426
- LU-A- 87 499
- US-A- 3 517 720
- US-A- 3 735 791
- US-A- 4 044 810
- US-A- 5 176 766
- PATENT ABSTRACTS OF JAPAN vol. 096, no. 002, 29 February 1996 & JP 07 285301 A (BRIDGESTONE CORP), 31 October 1995,

## Description

The present invention relates to a high-performance tyre, in particular in connection with the aquaplaning effect and wear-resistance, as well as to the manufacturing method and mould thereof.

More particularly, the tyre of the invention is of the type comprising a tread band provided with at least one extended circumferential cavity, preferably but not exclusively disposed at a central position, which is of large sizes for the purpose of fast ejection of all water collected on the ground so as to counteract the effect currently referred to as "aquaplaning" which consists in losing ground contact by the vehicle, in particular at high speed, due to the continuous water film interposed between the tyre and the ground.

Tyres of the above type, in which the tread substantially comprises two distinct axial portions separated from each other by a wide circumferentially-extended cavity have already been on the market since long and have been described in many patents briefly mentioned hereinafter for the purpose of summarizing the hitherto known state of the art.

For instance, patent EP 0 503 404 discloses a tread comprising circumferential and transverse S-shaped grooves, crossed with each other so as to form a plurality of blocks, and provided with a central cavity of a width corresponding to 10%-20% of the tread width and a depth corresponding to 78%-80% of the overall tread thickness.

Patent EP 0 503 405, in addition to the above, gives particular values for the angle of inclination of the entrance and exit walls of the blocks relatively to the ground-contacting area, and patent EP 0 503 406 illustrates particular connecting arcs of the side walls of the different tread band blocks.

Other details concerning the geometrical and operating features of the grooves and blocks in the tread pattern are described in US patent Nos. 5,176,766; 4,700,762; 4,785,863.

US Patent 4,796,683 refers to a tread pattern comprising a circumferentially-directed cavity and transverse grooves of great inclination to the cavity so as to promote water draining. In this tread pattern blocks are formed that have acute and obtuse angles. Close to the acute angles where stiffness is lower, the greatest abrasion can be found. Elimination of this drawback is suggested by forming particular chamfers in the blocks so as to increase the block stiffness at aimed areas.

US patent 4,289,182 refers to a motor cycle tyre adapted for high speed and provided with a tread pattern having a circumferentially-directed cavity and two sets of rectilinear transverse grooves at each side of the cavity. Between the grooves of the two sets a zigzag rib is formed.

The Applicant has noticed that the known tyres of the above type generally exhibit a marked wear of the tread band at the central area thereof, close to the cavity along the equatorial plane, which takes place early and goes on in time, giving rise to a quicker reduction in the lifetime of the tyre as compared with a possible lifetime of the same tyre resulting from the slower wear of the remaining tread portions.

It is a current hypothesis that this type of wear depends on a greater flexibility and deformability of the carcass by effect of the wide central cavity in the tread pattern.

US Patent 4,687,037, concerning a tyre comprised of a carcass, a belt and a tread band having a circumferential cavity in the middle, the width of which corresponds to 20% of the tread width, attempts to find a solution to this problem by imparting a particular rigidity to the belt. Actually the belt comprises a plurality of reinforcing layers having cords crossed with each other following known techniques, partly substantially extended over the whole width of the tread band, partly axially concentrated on given preferential areas.

In particular, the belt structure has four layers of mutually crossed cords of a width corresponding to the tread band width and two further reinforcing layers of a width as large as or slightly larger than the width of the central cavity. These further layers of reduced width are disposed below the cavity, the first layer between the two pairs of layers of a width as large as that of the tread band and the second layer immediately under the cavity, respectively.

Radially projecting outwardly from the cavity bottom, in such a manner as to nearly constituite a link between the two distinct tread band portions, there is a rib of elastomeric material extending over the whole cavity length.

Document US-3,517,720 relates to pneumatic tyres with improved traction thanks to a greater and more uniform contact between the tire and the road which is obtained, when the tyre is loaded, by providing it with a wide tread due to a particular combination of mould configuration and tyre construction. In particular, the following features are provided to the tyre: 1) the carcass has a plurality of body plies, the cord angle of each ply being such that the outside diameter of the tyre when inflated is substantially the same as when the tyre is moulded; 2) the tread surface is moulded with a cross-sectional profile in which the central portion of the tread is concave and the portions on both sides thereof are convex so that the profile of the tread presents a wide central depression; 3) the diameter of the moulded tyre at the centerline of the tread is substantially the same as the diameter at each shoulder and the difference between the diameters of the tyre at the shoulder and at the high points on the convex portions of the tread profile is a predetermined dimension which is obtained more or less empirically for each particular type and size of tyre.

Document US-3,735,791, which represents the closest prior art, relates to a method of increasing the tread life of a radial belted pneumatic tyre in which the tyre is cured in a mould with the central portion of the tread in a reversely curved configuration. The depth of the reversely curved portion, during curing in the mould, is maintained within predetermined limits and the reverse curvature in the tread is removed when the tyre is mounted on a rim and the design inflation pressure generates an internal force which is sufficient to remove the depression of the central portion of the tread with respect to the laterally opposite sides thereof.

The Applicant has intuitively understood that the known solutions were not capable of solving the problem because they started from a wrong perception of same and therefore they faced it in an inappropriate manner. In particular, in accordance with the invention, it has been understood that said early and localized wear depended on the anomalous expansion of the belt at the central cavity, which expansion was made possible by the reduced structural strength of the tread due to a lack of material at this very area.

This expansion was not sufficiently inhibited by the addition of new belt layers because all layers are fairly expandible in a circumferential direction due to a rotation of the reinforcing cords in the lying plane of the cords themselves and to the elasticity typical of the rubberizing material forming said layers.

Still in accordance with the invention, the Applicant's proposal to solve the problem is that of trying to achieve the reinforcing-belt stability in the area where the tread below the cavity is of reduced thickness by exerting a control on said anomalous belt expansion, so as to make a tyre in which the tread band is of improved performance in terms of wear and therefore has a longer lifetime.

Accordingly, the invention relates to a tyre for motor-vehicle wheels comprising the features of claim 1.

In a convenient embodiment of the invention, the concavity centre of said central portion lies in the centre line plane of said groove which is coincident with the equatorial plane of the tyre.

Preferably in this case the depth S of said concavity is defined by the relation:${\text{S = R}}_{\text{1}} {\text{- R}}_{\text{0}}$ wherein:
- R₁ corresponds to the radius of a known tyre, identical in its structure and size with said tyre, except for the fact that its belt structure under any condition and seen in right section exhibits a continuously concave profile in a radially internal position, measured at the equatorial plane when the tyre is mounted to the respective rim and inflated to the normal running pressure;
- R₀ corresponds to the radius of the same known tyre, still measured at the equatorial plane, on the tyre under non-working conditions.

In a preferred embodiment, said circumferential groove comprises, in combination with the underlying belt concavity, reinforcing means of said tread band, preferably disposed in a central position relative to said groove, radially projecting from the bottom; still more preferably these means comprise a continuous circumferential rib, disposed at the centre line plane of the groove, extended radially outwardly in cantilevered fashion from the groove bottom.

Conveniently, the ratio of the rib height to the groove depth along the centre line plane is included between 0.2 and 0.5.

It is to point out that the larger the sizes of said groove are and the lower the thickness of the elastomeric material is at said groove, the more the invention performs its advantageous effects: therefore preferably the thickness of said tread band at the centre line plane of the groove is included between 1 and 3.5 mm, the ratio value of the groove depth to the thickness of the underlying portion of the band being included between 2.5 and 10.

In another aspect the invention also relates to a process for manufacturing a tyre comprising a toric carcass provided with axially opposite sidewalls and beads for anchoring of said tyre to a corresponding mounting rim, a tread band disposed crown-wise to said carcass and a belt structure interposed between said carcass and tread band, axially extending in a continuous manner between said sidewalls, said tread band being moulded with a raised pattern provided with at least one circumferential groove, said process comprising the step of disposing the green tyre, in a toric conformation, in a vulcanization mould for achievement of its final moulding configuration by means of a heat treatment at high temperature and with the use of fluid under pressure, characterized by utilizing a mould forcing said belt structure to take a moulding configuration the profile of which, seen in right section in the plane containing the tyre axis, comprises three distinct portions, i.e. two side portions, respectively referred to as first and second portions, and one third portion, the central one, interposed between said side portions in register with said circumferential groove, said side portions being concave in a radially internal position, in which the concavity is defined for each portion by a respective centre and a respective radius of curvature, said central portion being concave in a radially external position, the depth of said radially external portion being capable of being cancelled under the effect of the normal inflating pressure of the tyre.

In still another aspect, the invention relates to a mould for tyre vulcanization, comprising axially opposite sidewalls and a tread band moulded with a raised pattern formed with at least one circumferential groove, said mould comprising a pair of axially opposite cheeks corresponding to the sidewalls of said tyre and a matrix interposed between said cheeks, corresponding to said tread band, said matrix being provided with a plurality of ribs projecting in a raised configuration from a bottom surface for forming said pattern, characterized in that, in a plane containing the mould axis, the sectional profile of said bottom surface comprises two distinct concave side portions, in which the concavity is defined for each portion by a respective centre and a respective radius of curvature, and the sectional profile of the surface tangent to the ridge of said ribs in the area included between said side portions has a convexity directed radially inwardly.

The present invention will be better understood with the aid of the following description and the accompanying drawings exclusively given by way of non-limiting example, in which:
- Fig. 1 shows an axial right section of the profile of a tyre in accordance with the invention in a use condition, that is mounted to the corresponding mounting rim (not shown) and inflated to the rated work pressure, in the absence of load;
- Fig. 2 shows, with the same references as in fig. 1, the profile of the tyre in accordance with the invention under two different conditions, i.e. a non-operating condition in solid line and a use condition in chain line, respectively;
- Fig. 3 shows the profile of a known tyre in the crown portion alone, under the same conditions as in Fig. 2, i.e. a non-operating condition in solid line and a use condition in chain line, respectively;
- Fig. 4 is a diagrammatic and partial profile in right section of the tyre belt in accordance with the invention, under the two different conditions shown in Fig. 2;
- Fig. 5 is a view in right section of a rib in the circumferential groove of the tyre tread band in accordance with the invention;
- Fig. 6 is a partial view of a preferred tread pattern in the tyre of the invention;
- Fig. 7 is an axial right section of the profile of a mould for manufacturing a tyre of known type (in solid line), the profile of a mould for manufacturing a tyre in accordance with the invention (in dotted line), and the profile of the surface tangent to the rib ridges in the mould in accordance with the invention (in chain line).

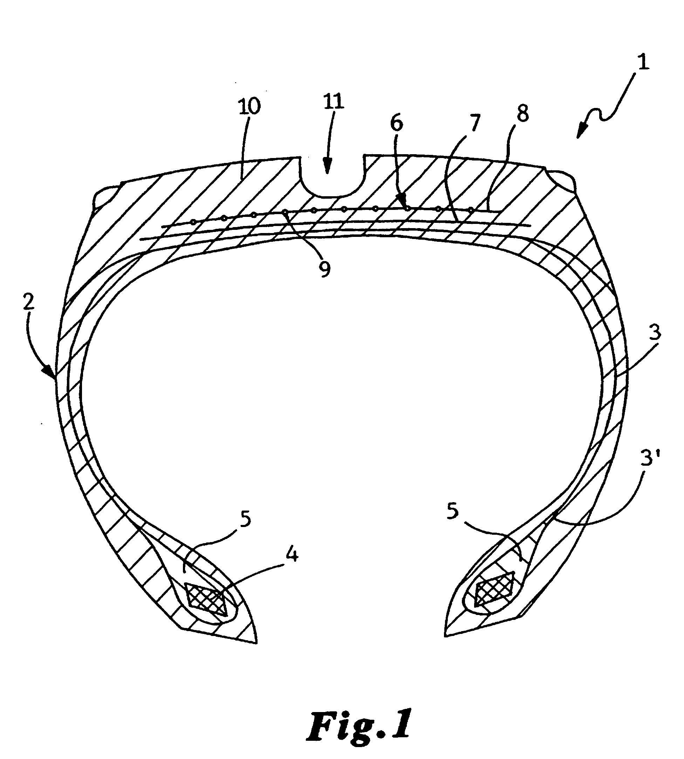

Fig. 1 shows a generic tyre structure, which is common both to the tyre of known type and to the tyre in accordance with the invention: the differences between the tyres and as regards the respective manufacturing methods will be illustrated in detail in the progress of the present description.

Tyre 1 comprises a carcass 2 of a strong structure formed of at least one ply 3 of rubberized fabric, the ends of which are each turned up about an anchoring core 4, which is provided with a rubber filling 5 on its radially outer surface. Preferably the turned-up flaps 3' of the carcass ply extend radially outwardly along at least part of the side of said filling.

As known, the tyre area comprising the anchoring core 4 and filling 5 forms the tyre bead intended for anchoring the tyre to a corresponding mounting rim (not shown).

Disposed on the carcass in known manner is a tread band 10 provided with a raised pattern and designed for carrying out the rolling contact of the tyre with the ground.

The tread pattern may comprise a plurality of ribs and/or blocks separated from each other by corresponding grooves directed both circumferentially and transversely, said ribs and/or blocks being optionally provided with different cuts and fins or lamellae, all that following configurations well known to those skilled in the art.

Tyre 1 further comprises a belt structure 6 disposed crown-wise to carcass 2, interposed between the carcass and tread band, substantially extending from one tyre sidewall to the other, that is as wide as the tread band, and comprising two radially superposed layers 7, 8 of preferably metallic reinforcing cords, parallel to each other in each layer and crossed with those of the adjacent layer with respect to the equatorial plane of the tyre, and a radially outermost layer 9 of reinforcing cords, preferably of textile material and more preferentially of a heat-shrinkable material (e.g. nylon) oriented at substantially 0°, that is in a circumferential direction.

For the sake of simplicity, and for better understanding the invention, Fig. 1 shows a tyre the tread band of which comprises one circumferential groove or cavity 11 alone, the centre line plane of which is coincident with the equatorial plane of the tyre, and in which the different blocks and further grooves that may be present on said band are omitted.

The main function of groove 11 is that of collecting and ejecting the water which stays between the tyre and the ground while the tyre is running on a wet road.

Said groove 11 is a means well known to those skilled in the art for ensuring to a high-performance tyre having particular tread patterns, an excellent resistance to the aquaplaning effect concurrently with other desirable features, some of which are in themselves negative towards said aquaplaning resistance.

Unfortunately, as already said in the part describing the known art, tyres of this type are subjected to a quick and continuous wear of the tread band, which wear is concentrated on the area on either side of the circumferential groove.

In accordance with the invention, the Applicant has intuitively understood that such an irregular wear, of impossible elimination with usual expedients of the known art, could depend on a deviation of the radially external profile of the tread band from the design value, and that this deviation was very likely to be maintained in time and restored when it was hindered by interventions on the structural elements of the tyre aiming at making attempts to eliminate the (visible) effects of this (unknown) deviation.

Actually, the tyre cross section (see Fig. 1) has a wide axial area, at the groove, where there is a very reduced thickness of the material (in relation to the thicknesses of the band on the groove sides) between the groove bottom and the belt, that is in the underlying cushion.

Practically, due to the reduced amount of material at the groove, this tread area has a reduced resistance to deformation, along the whole circumferential extension of the tyre, so that the corresponding belt portion, due to the thrust action of the inflating pressure, tends to expand to a greater degree than the side portions, thereby pushing the groove edges and the immediately close tread band portions, so that they take a profile radially more external than the previously calculated one, that is the design profile.

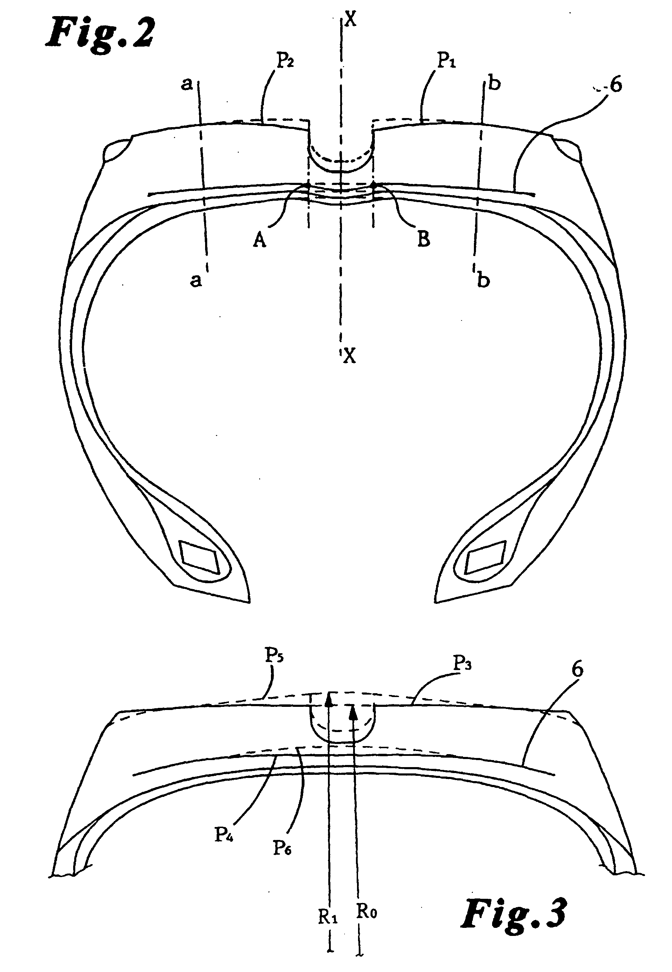

This phenomenon and the advantageous results achieved by the invention are shown in Figs. 2 and 3. In these figures and in the following ones the belt structure is graphically shown by a single line 6.

Shown in Fig. 2 in solid line is the profile (P₁) of a tyre in accordance with the invention in its moulding configuration, that is after extraction from the vulcanization mould, under deflated conditions, and in chain line the profile (P₂) of its final or use configuration, that is after it has been mounted to the corresponding rim and inflated to the work pressure, in the absence of load.

Fig. 3, showing the crown portion of a known tyre only, highlights, in solid line, the external profile (P₃) of the tread band and the profile (P₄) of the underlying belt 6 for the tyre in a deflated condition, and in chain line, the corresponding profiles (P₅) and (P₆) under use conditions, in the absence of load; from a comparison one can clearly see the particular expansion of the tread to which the known tyre is submitted under a work condition, at the area about the circumferential groove 11. The deviation between the two profiles can concern the whole width of the tread band; in particular on the tyre shoulders, profile P₅ may be radially internal to profile P₃.

Fig. 3 enables now to easily understand not only the cause of this uneven wear, but also why this cause is not eliminated by the known solutions of the state of the art: it is to note that profile P₃ substantially corresponds to profile P₂. In other words, as the elastomeric material portion included between profile P₅ and profile P₃ (Fig. 3) is abraded, new material is exposed to abrasion due to the belt expansion caused by the inflating pressure and also promoted by the progressive thickness reduction of the tread band at this area.

Fig. 2 already enables to intuitively understand the fundamental feature of the invention, consisting of a tyre structure that on passing from a deflated tyre to an inflated tyre modifies the radially external profile of the tread band, keeping it whithin the predetermined design limits, even in the presence of important localized variations in the thicknesses of said band.

In particular, Fig. 2 also shows an easy manner for distinguishing the inventive tyre from similar tyres of the known art without resorting to complicated and sometimes destructive examinations but merely with the aid of surveys of geometrical character carried out on the vulcanized tyre.

Practically, under non operating conditions, and more particularly in its moulding condition, the inventive tyre exhibits two distinct circumferential sections a-a and b-b, of maximum diameter, one for each tread half, substantially at the divergence points between the above mentioned profiles P₁ and P₂, the intermediate sections between these two sections being of lower diameter.

In the tyre in use these two sections converge on the equatorial plane X-X where however, due to the presence of the central groove, the diameter can be hardly measured but is of easy determination by extrapolation of the tread profile in axial right section.

In the prior art, tyres have been already known which under deflation conditions show two distinct circumferential sections of maximum diameter, but these sections, due to the presence of a belt structure of a quite traditional type, keep substantially unchanged even when the tyre is in its use conditions.

Disappearance of these two distinct sections from the inflated tyre is a clear sign that the tyre under examination is likely to be a tyre in accordance with the invention.

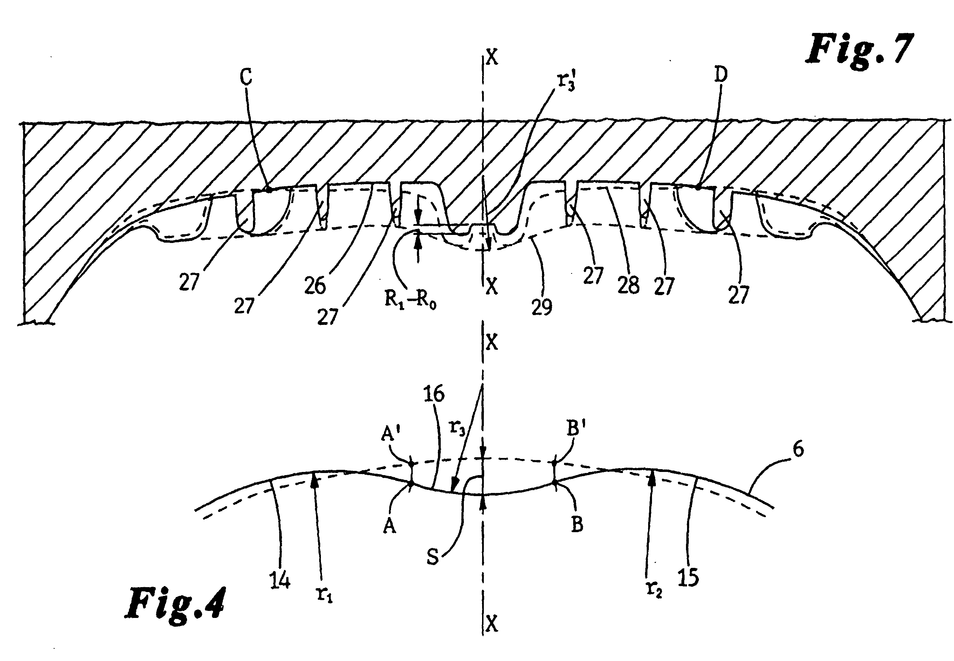

Substantially, the tyre of the invention when coming out of the mould has a particular configuration as regards its belt structure, better shown in Fig. 4, with which the tread profile and the profile of the underlying carcass ply match.

More particularly, the tyre belt 6 of the invention (Fig. 4) under deflated conditions, has a configuration (shown in solid line) comprising three distinct portions, respectively referred to as first (14) and second (15) portions, disposed laterally of the groove 11, and third portion (16) in the middle, at an intermediate position between the first and second portions.

The side portions 14 and 15 are outwardly convex and are each identified by a respective radius of curvature, r₁ and r₂, preferably of having identical size lenght each other, and by respective distinct centres of curvature.

The central portion 16 is outwardly concave and is identified by a different radius of curvature r₃, the centre of which in the case herein shown lies in the equatorial plane.

Highlighted on the belt profile are points A and B at which reversal of the profile curvature occurs: these points may substantially be in correspondence with the groove 11 edges, or they may not be coincident therewith and preferentially may be axially external thereto.

Substantially, as can be viewed from Fig. 2, on coming out of the mould the tyre of the invention, at the central portion where there is the groove comprises a profile of the tread band and the belt radially shifted inwardly relative to the corresponding moulding profiles of the known tyre (fig. 3) of same structure and size.

Said diametrical reduction corresponds to the greater expansion to which the known tyre is submitted on passing from the moulding condition to the inflation condition when mounted on the rim.

This particular belt conformation of the tyre in accordance with the invention enables the drawback of a quick localized wear of the known tyre to be overcome.

Actually, on passing from the deflated-tyre condition (or rest condition) to the use condition, the inflating pressure expands the whole belt radially outwardly; in particular, the greater expansion of the central belt portion 16, caused by the presence of groove 11, gives rise to reversal of curvature of said central portion and shifting of points A and B to points A' and B' on the predetermined inflation profile (chain line) thus bringing the external tread profile from configuration P₁ shown in Fig. 2 to configuration P₂ shown in the same figure and corresponding to the tyre use profile.

At this point the inflating pressure cannot cause further localized expansions in the tread, at the groove area, in that the belt expansion that cannot overcome given values bound to its structure, has been completely exhausted in bringing the profile of its central portion from a concave rest configuration, of lower diameter to the convex use configuration, of greater diameter.

Therefore, at the groove 11 there are no longer tread areas subjected to greater expansion than the remaining side portions and therefore subjected to a greater specific pressure against the ground, and consequently the tread abrasion takes place evenly over the whole surface of the ground-contacting area, which will bring about overcoming of the drawback found in known tyres and consisting in a quick and continuous localized wearing.

The tyre belt in accordance with the invention must be manufactured in a manner adapted to take said variable curvature configuration which varies between two opposite, concave and convex, positions: in particular, the belt features taken as a whole are capable of enabling, during the tyre moulding, storage of elastic energy due to the imposed deformation of the central belt portion, which energy is released during the deformation in the opposite direction imposed by the inflating pressure, thereby facilitating the curvature reversal enabling the tyre belt to achieve its work disposition.

In a convenient embodiment represented by a prototype tyre, size 195/60 R 15 made by the Applicant, the tyre comprises a belt structure provided with two radially superposed layers of a rubberized fabric reinforced with metallic cords of formation 1x3, that is consisting of 1 strand of 3 steel wires, of a diameter preferably included between 0.20 and 0.32 mm, in this case 0.28 mm, the cords in the fabric having a thickness included between 70 and 110 wires/dm, in this case 85 wires/dm, preferably oriented at an angle included between 20° and 30°, measured crown-wise with respect to the equatorial plane of the tyre, in this case 25°, and directed symmetrically with the cords of the adjacent layer.

Disposed at a position radially external to that of said pair of layers there is a third layer, and preferably two further layers radially superposed, of textile cords, conveniently cords made of nylon of 1400/1 dTtex directed circumferentially to the tyre; this third layer is advantageously made up of one or more cords helically wound in one or more layers about said layers of crossed metallic cords.

In connection with said dimensional and structural values of the reinforcements and belt respectively, the following values for the radii of curvature relating to the three belt portions diagrammatically shown in Fig. 4 can be reached at the end of the moulding step:
- radii of curvature r₁ and r₂ of the belt side portions included between 120 and 500 mm,
- distance between centres of radii r₁ and r₂, measured in axial section, parallely to the rotation axis of the tyre, preferably included between 10% and 30% of the belt width,
- radius of curvature r₃ of the belt portion 16 preferably included between 20 and 150 mm.

In accordance with a preferred alternative embodiment of the invention, the tyre comprises tread stiffening means disposed in the groove 11, the main function of which is that of continuously modifying the curvature reversal of the third belt portion from concave to convex during the tyre inflation. This stiffening means offers a resistance to curvature reversal thereby avoiding the occurrence of movements by jerks that could give rise to tearings of the tyre in the underlying cushion, that is that portion of reduced thickness included between the groove bottom and the belt. To perform said function, different solutions for reinforcing the groove 11 may be provided, of which those resulting from particular geometries of the tread band within the groove itself are preferred.

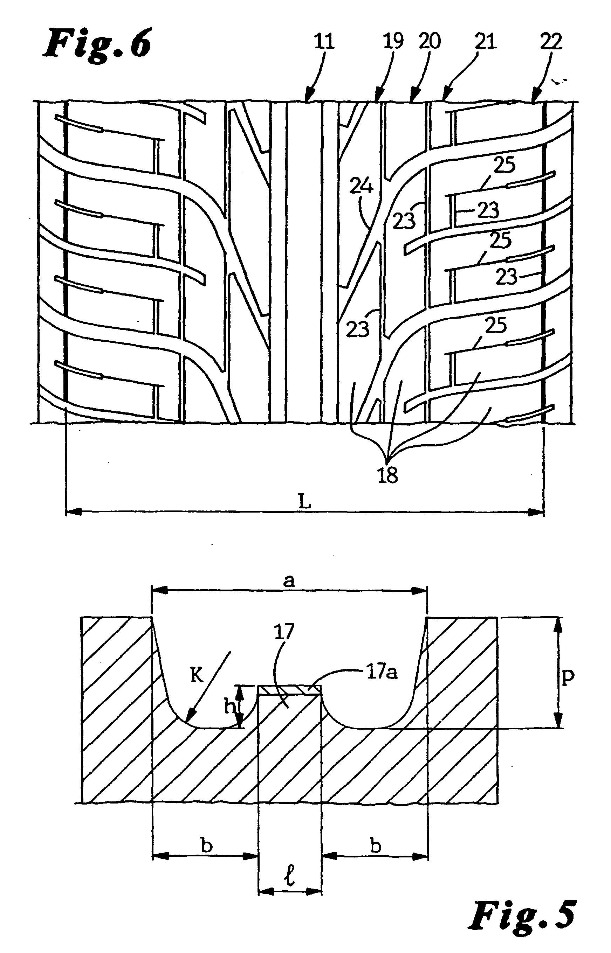

In a preferential solution shown in fig. 5, the groove 11 comprises a circumferentially continuous rib 17, extending in cantilevered fashion from the groove bottom, preferably arranged symmetrically to the centre line plane of said groove.

Preferably rib 17 is of a shape and thickness adapted to avoid formation of a hinge at the groove bottom, that is a concentration point for all efforts and deformations connected with the bending movement reversing the belt curvature, which would bring about the well known disadvantages.

The rib 17 can be made of an elastomeric material, preferably of the same blend as the tread band or, alternatively, of a different blend, which may be optionally filled with inert reinforcing fillers of the type usually used in tyres, such as for example short aramide fibres of fibril structure, commercially known as aramide pulp, or magnetic powders so as to use said rib as a medium for recording codes and various information of technical or commercial kind, relating to the tyre.

The rib 17 comprises a head portion of flat or even wedge-shaped or curvilinear configuration, preferably connected to the groove bottom by curvilinear flanks in the form of an arc of a circle for example. Preferably the two portions too of the groove bottom separated from each other by the rib are connected to rectilinear flanks defining the groove by means of curvilinear connections. Advantageously, the rib head 17a can be made of a coloured blend, optionally of the fluorescent type, for different purposes such as aesthetic, commercial (such as a trademark) or safety purposes, for signalling reaching of the aquaplaning danger and/or the maximum admissible wear limit for the tread. It is clear that this solution can be applied to the tyre independently of the presence of a belt in conformity with the invention.

In the Applicant's above mentioned prototype tyre, the groove in fig. 5 has a maximum width "a" of 20 mm (i.e. corresponding to 12% of the tread width, and preferably included between 10% and 18% of said width), a depth "p" of 8.5 mm and preferably included between 7 and 9.5 mm, a rib height "h" from the groove bottom of 3 mm and preferably included between 1.5 and 4 mm, in which the p/h ratio between the depth of said groove and height of said rib has a value preferably included between 1.75 and 6.5; a width "1" of the rib head of 4.6 mm and preferably included between 3 and 8 mm; preferably the arcs of cercles for connection between the groove walls and rib walls have a radius "k" of 2.5 mm and preferably at least as large as 2 mm.

The underlying cushion thickness, that is the minimum thickness of the compound interposed between the groove bottom and the facing surface of the radially outermost belt layer is of 2 mm and preferably included between 1 and 3.5 mm.

As an alternative solution to the above, the stiffening means for the groove could comprise a series of ribs, all of same shape or not, departing in cantilevered fashion from the bottom, for example disposed either in a single circumferential line spaced apart from each other, or in several circumferential lines in side by side relationship and optionally staggered relative to each other.

Fig. 6 shows a specific embodiment of the invention in a high-performance tyre provided with a pattern of the directional type: clearly the invention advantageously applies to any pattern type, not only a directional type but also a symmetric or asymmetric type, with blocks or ribs, especially although not exclusively when provided with large circumferentially-directed grooves, the specific usefulness of which is that of eliminating an early wear concentrated on the areas close to said groove edges.

In the connection it is to note that in the present description reference has been always made to a groove 11 extending in register with the equatorial (centre line) plane of the tyre so that the centre of curvature of the central concave portion 16 of the belt structure is shown lying in said plane. However said groove can extend also along one or more circumferential planes that do non coincide with the equatorial plane of the tyre: it is clear that in such a case the centres of curvature of the three different portions too (14, 15, 16) will undergo corresponding shiftings in the axial direction.

The drawing in Fig. 6 is a convenient elaboration of the tread pattern in a symmetric version disclosed in the Applicant's patent application MI 93 A 001119 of May 31, 1993 (to which please refer for more detailed information) for the purpose of specializing use of same for marked sports utilizations.

The pattern comprises, in combination with the central groove 11 preferably provided with rib 17, a plurality of transverse grooves 24 extending axially on both sides of the equatorial plane and in mirror image relationship with respect to said plane, between the central groove 11 and the corresponding tread end, greatly inclined in the longitudinal direction close to the central groove, directed almost axially on the side tread portions. Said transverse grooves, in combination with a plurality of longitudinal grooves 23 extending circumferentially to the tyre and transverse slits 25, define a plurality of blocks 18 distributed in circumferential parallel rows 19, 20, 21, 22.

Preferably, each of said rows comprises at least as many blocks as the number of blocks present in the row disposed consecutively thereto in side by side relation towards the equatorial plane of the tread. It is apparent from the foregoing that also the symmetric pattern of said patent application can be associated in a particularly advantageous fashion with the belt structure in accordance with the invention: in the tyre of the invention these patterns achieve a high resistance to the aquaplaning effect together with a strong traction power, excellent behavioural qualities, low abrasion capability, minimum rolling resistance and high quietness on running.

One can intuitively easily understand how an accelerated wear of the central portion of said patterns, particularly promoted by the tapering configuration of the block edges in the central rows would make the corresponding tyre seriously deficient in relation to the intended type of use, in addition to involving an economic loss resulting from the reduced lifetime of same.

It is apparent from the foregoing that for accomplishment of the invention, moulding is carried out according to a particular profile of the belt structure the geometrical size of which must be calculated in advance, for the purpose of achieving the desired effect.

In accordance with the invention, said moulding profile for the tyre is imposed by assigning a specific profile in cross-section to the vulcanization mould surface. The vulcanization mould too is, taken as a whole, of a known and traditional type and therefore those details that are considered as inessential for comprehension of the present invention are herein omitted. It will be sufficient to remember that the mould comprises two axially opposite cheeks corresponding to the tyre sidewalls, and an intermediate annular portion disposed between the two cheeks and provided on its radially inner surface, with a matrix having a plurality of ribs projecting in a raised configuration from a bottom surface for moulding of the tread pattern.

Shown in Fig. 7 is the cross section of this mould, the use of a sector mould of the centripetal type being assumed, obviously not in a limiting sense.

There is therefore the problem of establishing the amount of radial deviation between the traditional matrix profile and the profile to be assigned to the matrix of a mould in accordance with the invention to achieve said belt profile.

The process of the invention is therefore carried into effect as follows.

As already said, the tyre structure is a structure known per se; it is herein pointed out that the tyre is also assembled in the traditional way following the known methods and with the usual apparatuses of the state of the art, until a green tyre ready for vulcanization is obtained.

Thus, a known tyre is prepared in the stated usual manner, which tyre is subsequently vulcanized in a service mould the geometrical sizes of which have been calculated in the traditional way, provided with the final tread pattern. From the preceding explanation it is therefore apparent that the final tyre profile under use conditions also depends on the overall features of the tread pattern thereof.

The profile 26 of the radially inner surface of this mould is denoted by a solid line in Fig. 7. In the same Fig. 7, identified by 27 are some ribs designed to form cavities and grooves in the tread pattern: in addition, also highlighted by a dotted line is the profile 28 of the mould modified in accordance with the invention and by a chain line 29 the profile of the surface tangent to the rib ridges according to profile 28.

The determination of the inner profile for the new mould takes place as follows.

The known tyre vulcanized in a service mould is mounted to the respective rim and inflated to the exercise pressure.

Detection of the radially external profile (P₅ in Fig. 3) of the tread band is carried out from one end to the other, thereby determining the actual tyre expansion (or shrinkage, if present), that is the punctual deviation value of this profile, point by point, along its axial extension, from the known theoretical profile (P₃ in Fig. 3) resulting from the design.

Then said deviation values are used for construction of the final mould for tyre vulcanization; in other words, these values are negatively reproduced on the corresponding points of the matrix surface (bottom surface) of the service mould, thereby determining the new radially internal profile 28 of the bottom surface of the corresponding final vulcanization mould.

Practically it is generally sufficient to detect value R₁ of the radius in the known tyre inflated to its use pressure, at the equatorial plane, determine the difference between this radius and radius R₀ of the same known tyre under non-operating conditions, i.e. rest conditions, reproduce value S of the R₁-R₀ difference on the radially inner surface of the service mould at the equatorial plane and join this point (while keeping unchanged the geometry and sizes of the ribs encountered along the axial extension of the profile) to two other points (C, D), one on each side of the equatorial plane, at which deviation between the two profiles is zero, for drawing the new radially inner profile of the final mould.

At this point the new inner profile of the mould is completely defined.

Preferably the process will make use of the radius detection at at least three distinct points, one central point at the equatorial plane and two side ones, for example at the groove edges or disposed axially externally of said edges, and more preferentially at five points, two of which are located close to the tread ends.

Conveniently, the process will be put into practice by carrying out vulcanization in the service mould and inspecting a plurality of known tyres, so as to construct a table of values from which the average final value to be used will be drawn. In this manner the consequences of accidental errors and fortuitous disturbances that could alter the results of a single detection can be eliminated. The process in accordance with the invention will be preferably followed for preparing the final moulds for each different tyre size.

The new profile of the matrix bottom surface consists of two distinct and axially opposite concave side portions in respect of the equatorial plane of the mould, each of them being defined by a radius of its own and a centre of curvature of its own, in which the respective radii r'₁ and r'₂ are preferably identical with each other, whereas the profile of the surface tangent to the rib ridges according to the new profile has a central portion, included between said side portions, which is radially inwardly convex, the concavity of which faces said bottom surface, identified by a radius r'₃ relative to the envelope arc of the rib designed to form the groove 11 in the tread band.

In the described example, the following values of the radii of curvature r'₁, r'₂, r'₃ in the matrix have been found: r'₁ = r'₂ in the range between 150 and 300 mm, r'₃ in the range between 20 and 150 mm.

Thus the final moulds can be built up and the production of tyres in accordance with the invention making use of these moulds can be carried out.

During the tyre moulding and vulcanization step, carried out, as known, by blowing fluid under pressure into the tyre held inside the vulcanization mould, the greater penetration of the inner mould profile due to the value of lowering R₁ - R₀ relative to the mould of the known art gives rise to a compression on the corresponding belt portion which results in formation of a hollow or concave portion 16, visible in Figs. 2 and 4, the depth of which measured along its centre line plane is substantially the same as lowering S assigned to the inner profile of the known mould, in accordance with the described process.

At the end of the cycle, pulled out of the mould is a vulcanized tyre having the mould configuration delimited by profile 28 of Fig. 7 in turn corresponding to profile P₁ of Fig. 2 (except for the rib 17 not shown in Fig. 2).

The tyre keeps its moulding shape until use, and takes it again when it is deflated.

In case of use, after mounting the tyre to the corresponding rim, air under pressure is inflated into the closed space between the rim and the tyre. During inflation, the air pressure urges against the whole belt surface and gradually reverses the convexity of the central belt portion, this action being facilitated by return of the previously-stored elastic energy due to deformation of the metal wires in the belt.

Therefore the ranges of variability of the specific physical and geometrical parameters cited in the preceding description of a particular embodiment of the tyre in accordance with the invention represent critical value ranges for an optimal achievement of the advantages resulting from the invention.

The work configuration of the belt is a stable configuration (Fig. 4) identified by a curvature continuously convex towards the outside over its whole extension.

The tread profile follows the stable belt disposition and is identified by convex curvatures as well over its whole extension: preferably, it has two radii of curvature rb₁ and rb₂ identical with each other on the side portions of the band, and a third radius of curvature rb₃ the centre of which is along the equatorial plane and the value of which preferably is greater than that of the side portions, with a ratio value rb₃/rb₁ = rb₃/rb₂ included between 1 and 5; this profile is the profile P₂ in Fig. 2 which is well different from that (P₃ in Fig. 3) obtained in known tyres, after inflation of the tyre mounted on the respective rim, and in particular it is a substantially flat profile at the area surrounding the groove 11, capable of ensuring a uniform specific pressure over the whole ground-contacting area of the tyre.

Consequently, the tyre of the invention overcomes the problems of localized and early wear of the tread, encountered in the known tyres.

It will be finally recognized that the foregoing description is for purposes of illustration only and therefore a person skilled in the art, after understanding the invention as above disclosed, will be able to carry out modifications, variations and replacements of the variables associated with the present invention in order to meet specific and contingent requirements for application of same.

## Claims

1. A tyre for motor-vehicle wheels (1) comprising:
• a radial carcass (2) provided with axially opposite sidewalls and beads for anchoring of said tyre to a corresponding mounting rim;
• a tread band disposed crown-wise to said carcass, and
• a belt structure (6) interposed between said carcass and tread band, axially extended in a continuous manner between said sidewalls,
wherein:
• said tread band is moulded with a raised pattern having at least one circumferential groove (11), and
• said belt structure, in the absence of load and inflating pressure, has an axial profile which, seen in right section in the plane containing the tyre axis, comprises:
- two side portions, referred to as first (14) and second (15) portions, said side portions being concave at a radially internal position, the concavity for each portion being defined by a respective centre and a respective radius of curvature, and
- one central portion (16) interposed between said side portions in register with said circumferential groove (11), said central portion being concave at a radially external position,
the depth of the concavity of said central portion (16) being cancelled under the effect of the normal inflating pressure of the tyre, said inflating pressure increasing the diameter of the axial profile of said central portion (16),
**characterized in that** a tread stiffening means (17) is disposed in said circumferential groove (11).

2. A tyre as claimed in claim 1, **characterized in that** said tread stiffening means (17) comprises at least one rib (17) extending in cantilevered fashion from the bottom of said circumferential groove (11).

3. A tyre as claimed in claim 2, **characterized in that** said rib (17) is located at the centre line plane of said circumferential groove (11) and is circumferentially continuous.

4. A tyre as claimed in claim 2, **characterized in that** the ratio of said groove depth (p) to the height of said rib (h) is included between 1.75 and 6.5.

5. A tyre as claimed in claim 2, **characterized in that** said rib (17) comprises a rib head (17a) having a width (1) included between 3 mm and 8 mm.

6. A tyre as claimed in claim 5, **characterized in that** the head (17a) of said rib is made of a coloured blend.

7. A tyre as claimed in claim 1, **characterized in that** the concavity centre of said central portion lies in the centre line plane of said groove (11) which is coincident with the equatorial plane of the tyre.

8. A tyre as claimed in claim 7, **characterized in that** the depth of said concavity is defined by the following relation:${\text{S = R}}_{\text{1}} {\text{- R}}_{\text{0}}$ wherein:
- R₁ corresponds to the radius of a known tyre, substantially identical in its structure and size with said tyre, the belt structure of which, under any condition and seen in axial cross section, exhibits a continuously concave profile in a radially internal position, measured along the equatorial plane of the tyre, when the tyre is mounted to the respective rim and inflated to the normal running pressure;
- R₀ corresponds to the radius of the same known tyre, still measured along the equatorial plane of the tyre, under non-working conditions.

9. A tyre as claimed in claim 1, **characterized in that** the radii of curvature of said concave side portions are substantially identical with each other and have a value included between 120 and 500 mm.

10. A tyre as claimed in claim 1, **characterized in that** the radius of curvature of said central concave portion is of a value included between 20 and 150 mm.

11. A tyre as claimed in claim 1, **characterized in that** the thickness of said tread band at the equatorial plane is included between 1 and 3.5 mm.

12. A tyre as claimed in claim 1, **characterized in that** the ratio of said groove (11) depth to the thickness of the underlying tread band portion is included between 2 and 10.

13. A tyre as claimed in claim 1, **characterized in that** the width of said groove (11) is included between 10% and 18% of the width of said tread band.

14. A tyre as claimed in claim 1, **characterized in that** said groove (11) comprises reinforcing means for said tread band.

## Patentansprüche

1. Reifen für Kraftfahrzeugräder (1)
- mit einer radialen Karkasse (2), die mit axial gegenüberliegenden Seitenwänden und Wulsten für die Verankerung des Reifens an einer entsprechenden Montagefelge versehen ist,
- mit einem Laufflächenband, das kronenförmig an der Karkasse angeordnet ist, und
- mit einem Gurtaufbau (6), der zwischen der Karkasse und dem Laufflächenband angeordnet und sich axial durchgehend zwischen den Seitenwänden erstreckt,
- wobei das Laufflächenband mit einem erhabenen Muster ausgeformt ist, das wenigstens eine Umfangsnut (11) hat,
- wobei der Gurtaufbau bei Fehlen einer Belastung und eines Aufpumpdrucks ein axiales Profil hat, das im Schnitt in der die Reifenachse enthaltenen Ebene
-- zwei Seitenteile, nämlich ein erstes Seitenteil (14) und ein zweites Seitenteil (15), die an einer radial inneren Position konkav sind, wobei die Konkavität eines jeden Teils durch ein entsprechendes Zentrum und einen entsprechenden Krümmungs-radius definiert ist, und
-- einen zentralen Teil (16) aufweist, der zwischen den Seitenteilen in Deckung mit der Umfangsnut (11) angeordnet und an einer radial äußeren Position konkav ist, und
-- wobei die Tiefe der Konkavität des zentralen Teils (16) durch die Wirkung des normalen Aufpumpdrucks des Reifens beseitigt wird und der Aufpumpdruck den Durchmesser des axialen Profils des zentralen Teils (16) vergrößert,
**dadurch gekennzeichnet,**
- **dass** in der Umfangsnut (11) eine Laufflächenverstärkungseinrichtung (17) angeordnet ist.

2. Reifen nach Anspruch 1, **dadurch gekennzeichnet, dass** die Laufflächenversteifungseinrichtung (17) wenigstens eine Rippe (17) aufweist, die sich konsolenartig von dem Boden der Umfangsnut (11) aus erstreckt.

3. Reifen nach Anspruch 1, **dadurch gekennzeichnet, dass** sich die Rippe (17) auf der Mittellinienebene der Umfangsnut (11) befindet und am Umfang durchgehend ist.

4. Reifen nach Anspruch 2, **dadurch gekennzeichnet, dass** das Verhältnis der Nuttiefe (p) zur Rippenhöhe (h) zwischen 1,75 und 6,5 liegt.

5. Reifen nach Anspruch 2, **dadurch gekennzeichnet, dass** die Rippe (17) einen Rippenkopf (17a) mit einer Breite (I) zwischen 3 mm und 8 mm hat.

6. Reifen nach Anspruch 5, **dadurch gekennzeichnet, dass** der Rippenkopf (17a) aus einer gefärbten Mischung hergestellt ist.

7. Reifen nach Anspruch 1, **dadurch gekennzeichnet, dass** die Konkavitätsmitte des zentralen Teils in der Mittellinienebene der Nut (11) liegt, die mit der Äquatorialebene des Reifens zusammenfällt.

8. Reifen nach Anspruch 7, **dadurch gekennzeichnet, dass** die Tiefe der Konkavität durch die folgende Beziehung definiert ist${\text{S = R}}_{\text{1}} {\text{- R}}_{\text{0}}$ wobei
- R₁ dem Radius eines bekannten Reifens entspricht, der im Wesentlichen in seinem Aufbau und seiner Größe zu dem Reifen identisch ist, dessen Gurtaufbau bei jedem Zustand und gesehen im Axialschnitt ein durchgehend konkaves Profil in einer radial inneren Position gemessen längs der Äquatorialebene des Reifens hat, wenn der Reifen auf die entsprechende Felge montiert und auf den normalen Fahrdruck aufgepumpt ist, und
- R₀ dem Radius des gleichen bekannten Reifens wieder gemessen längs der Äquatorialebene des Reifens bei Nicht-Einsatz-Bedingungen entspricht.

9. Reifen nach Anspruch 1, **dadurch gekennzeichnet, dass** die Krümmungsradien der konkaven Seitenteile im Wesentlichen identisch zueinander sind und einen Wert zwischen 120 und 500 mm haben.

10. Reifen nach Anspruch 1, **dadurch gekennzeichnet, dass** der Krümmungsradius des zentralen konkaven Teils einen Wert zwischen 20 und 150 mm hat.

11. Reifen nach Anspruch 1, **dadurch gekennzeichnet, dass** die Dicke des Laufflächenbandes in der Äquatorialebene zwischen 1 und 3,5 mm beträgt.

12. Reifen nach Anspruch 1, **dadurch gekennzeichnet, dass** das Verhältnis der Tiefe der Nut (11) zur Dicke des darunter liegenden Laufflächenbandteils zwischen 2 und 10 liegt.

13. Reifen nach Anspruch 1, **dadurch gekennzeichnet, dass** die Breite der Nut (11) zwischen 10% und 18% der Breite des Laufflächenbandes beträgt.

14. Reifen nach Anspruch 1, **dadurch gekennzeichnet, dass** die Nut (11) Verstärkungseinrichtungen für das Laufflächenband aufweist.

## Revendications

1. Pneu (1) pour roues de véhicule automobile comprenant :
une carcasse radiale (2) munie de parois latérales axialement opposées et de talons pour l'ancrage dudit pneu sur une jante correspondante ;
une bande de roulement placée dans le sens du sommet par rapport à ladite carcasse, et
une structure de ceinture (6) intercalée entre ladite carcasse et ladite bande de roulement, s'étendant axialement d'une manière continue entre lesdites parois latérales,
dans lequel :
ladite bande de roulement est moulée avec un dessin en relief comportant au moins une rainure circonférentielle (11), et
ladite structure de ceinture, en l'absence de charge et de pression de gonflage, a un profil axial qui, vu en section droite dans le plan comportant l'axe du pneu, comprend :
- deux parties latérales, appelées première (14) et deuxième (15) parties, lesdites parties latérales étant concaves en une position radialement intérieure, la concavité de chaque partie étant définie par un centre respectif et par un rayon de courbure respectif, et
- une partie centrale (16) intercalée entre lesdites parties latérales en correspondance avec ladite rainure circonférentielle (11), ladite partie centrale étant concave en une position radialement extérieure,
la profondeur de la concavité de ladite partie centrale (16) étant annulée sous l'effet de la pression de gonflage normale du pneu, ladite pression de gonflage augmentant le diamètre du profil axial de ladite partie centrale (16),
**caractérisé en ce qu'**un moyen de renfort de bande de roulement (17) est placé dans ladite rainure circonférentielle (11).

2. Pneu selon la revendication 1, **caractérisé en ce que** ledit moyen de renfort de bande de roulement (17) comprend au moins une nervure (17) s'étendant en porte à faux depuis le fond de ladite rainure circonférentielle (11).

3. Pneu selon la revendication 2, **caractérisé en ce que** ladite nervure (17) est placée au niveau du plan axial de ladite rainure circonférentielle (11) et est circonférentiellement continue.

4. Pneu selon la revendication 2, **caractérisé en ce que** le rapport de ladite profondeur (p) de rainure à la hauteur (h) de ladite nervure est compris entre 1,75 et 6,5.

5. Pneu selon la revendication 2, **caractérisé en ce que** ladite nervure (17) comprend un sommet de nervure (17a) ayant une largeur (1) comprise entre 3 mm et 8 mm.

6. Pneu selon la revendication 5, **caractérisé en ce que** le sommet (17a) de ladite nervure est fait d'un mélange de couleurs.

7. Pneu selon la revendication 1, **caractérisé en ce que** le centre de concavité de ladite partie centrale se trouve dans le plan axial de ladite rainure (11) qui coïncide avec le plan équatorial du pneu.

8. Pneu selon la revendication 7, **caractérisé en ce que** la profondeur de ladite concavité est définie par la relation suivante :${\text{S = R}}_{\text{1}} {\text{- R}}_{\text{o}}$ dans laquelle :
- R₁ correspond au rayon d'un pneu connu, sensiblement identique dans sa structure et sa taille audit pneu, dont la structure de ceinture, dans toute condition et vue en section axiale, présente un profil constamment concave en une position radialement intérieure, mesuré le long du plan équatorial du pneu, lorsque le pneu est monté sur la jante respective et est gonflé à la pression normale de fonctionnement ;
- R0 correspond au rayon du même pneu connu, toujours mesuré le long du plan équatorial du pneu, dans des conditions de non fonctionnement.

9. Pneu selon la revendication 1, **caractérisé en ce que** les rayons de courbure desdites parties latérales concaves sont sensiblement identiques l'un à l'autre et ont une valeur comprise entre 120 et 500 mm.

10. Pneu selon la revendication 1, **caractérisé en ce que** le rayon de courbure de ladite partie centrale concave a une valeur comprise entre 20 et 150 mm.

11. Pneu selon la revendication 1, **caractérisé en ce que** l'épaisseur de ladite bande de roulement au niveau du plan équatorial est comprise entre 1 et 3,5 mm.

12. Pneu selon la revendication 1, **caractérisé en ce que** le rapport de ladite profondeur de rainure (11) à l'épaisseur de la partie de bande de roulement sous-jacente est compris entre 2 et 10.

13. Pneu selon la revendication 1, **caractérisé en ce que** la largeur de ladite rainure (11) est comprise entre 10% et 18% de la largeur de ladite bande de roulement.

14. Pneu selon la revendication 1, **caractérisé en ce que** ladite rainure (11) comprend un moyen de renfort pour ladite bande de roulement.
